Europäisches Patentamt

**European Patent Office**

Office européen des brevets

(19)

(11) Publication number: **0 058 576**

**A1**

(12)

# EUROPEAN PATENT APPLICATION

(21) Application number: **82300836.2**

(22) Date of filing: **18.02.82**

(51) Int. Cl.³: **D 06 F 39/00**

(30) Priority: **18.02.81 GB 8105086**

(43) Date of publication of application:
**25.08.82 Bulletin 82/34**

(84) Designated Contracting States:
**DE FR GB IT SE**

(71) Applicant: **EATON S.A.M.**
**14 Boulevard du Bord de Mer Boite Postale 84**
**Monaco(MC)**

(72) Inventor: **Corbier, Jean Paul**
**10 avenue Professeur Langevin**
**F-06240 Beausoleil(FR)**

(72) Inventor: **Negro, Gilbert**
**"Le Saint Vincent" 124, Val du Carei**
**F-06500 Menton(FR)**

(74) Representative: **Wright, Peter David John et al,**
**R.G.C. Jenkins & Co. 53-64 Chancery Lane**
**London WC2A 1QU(GB)**

(54) **Sensor arrangement for a washing machine.**

(57) The sensor arrangement comprises means for transmitting light (34) along paths which diverge across regions of space accessible to a fluid in use of the arrangement, and two light sensitive elements (38, 40) disposed in the light paths for generating outputs dependent upon the clarity of the fluid, the light transmitting means and the light sensitive elements being arranged to co-operate with control circuitry so as to compensate for spurious variations in local conditions affecting the transmission of light from the light transmitting means to the light sensitive elements and so as to generate an output signal when the fluid has a predetermined degree of clarity.

Fig. 2.

## SENSOR ARRANGEMENT FOR A WASHING MACHINE

This invention concerns sensors for use in washing machines, such as dishwashers and clothes washing machines.

In automatic washing machines, the items being washed are subjected to one or more washing cycles and, following this, one or more rinsing cycles. Certain machines are designed to have a preset number of rinsing cycles irrespective of the size and initial degree of soiling of the load to be washed. Inevitably if this type of machine is preset in the factory to provide sufficient rinsing for a large load or one which is heavily soiled, then both water and energy will be wasted whenever the machine is used for a small or relatively clean load.

For this reason, various other automatic washing machines are equipped with sensor arrangements for determining the cleanliness of the rinsing water after each rinse and for controlling the number of rinsing cycles accordingly. Such an arrangement typically includes a light source and a single sensing element positioned in the direct path of light from the source through the rinsing water.

One of the problems with this type of sensing arrangement is that the light received by the sensing element, and hence its output signal for controlling the number of rinsing cycles of the machine is affected not only by the cloudiness of the rinsing water, but also by the amount of light emitted by the lamp and by the amount of light transmitted through protective casings which shield the light source itself and the sensing element from the rinsing water. Thus, ageing of the lamp, the formation of deposits on the surfaces of the protective casings, and deterioration of the transmission characteristics of the two casings themselves if these are made of plastics material, tend to render the reading of the sensing element inaccurate in the course of time.

In the present invention, this problem is alleviated by employing an arrangement including two sensing elements which compensates for such effects.

According to the invention, there is provided a sensor arrangement for a washing machine comprising means for transmitting light along paths which diverge across regions of space accessible to a fluid in use of the arrangement, and two light sensitive elements disposed in the light paths for generating outputs dependent upon the clarity of the fluid, the light transmitting means and the light sensitive elements being arranged to co-operate with control circuitry so as to compensate for spurious variations in local conditions affecting the transmission of light from the light transmitting means to the light sensititive elements and so as to generate an output signal when the fluid has a pre-determined degree of clarity.

As described below, the two light sensitive elements are conveniently arranged in relation to a source of light to fulfil the following mathematical equation:

$$\frac{I_c}{I_m} = e^{k\tau}$$

where:  $I_c$  =  the intensity of light received by the first sensing element

$I_m$  =  the intensity of light received by the second sensing element

K  =  a constant determined by the distances between the light source and the two sensing elements

$\tau$  =  the coefficient of turbidity of the liquid

Thus, the cleanliness of rinsing water may be established either by controlling the sensor arrangement such that one of $I_c$ or $I_m$ remains constant, measuring the other, and computing $\tau$ from the measurement taken; or measuring $I_c$ or $I_m$ independently and computing $\tau$ from the two measurements taken.

- 4 -

It is assumed in the following description that the two surfaces at which the respective light beams enter the regions exposed to fluid in use become obscured by deposits from the fluid at the same rate and, likewise, so do the two surfaces at which the respective light beams leave these regions. In this way, the effects of these variables on the readings produced by each sensor will cancel one another out. For the same reason, it is desirable to ensure that the light beams are of substantially the same intensity as they enter the two regions. Also, if the parts of the sensor arrangement are housed within a casing or casings formed from a material or materials subject to increasing opacity on ageing, it is advantageous if the arrangement is such that the two light beams traverse the same distance through any given type of such material.

On this basis, the turbidity of the fluid in the regions exposed to this fluid may be determined from the equation mentioned above.

Although it is possible for the light transmitting means to comprise a pair of identical light sources, it is preferable to use a single source because this eliminates the difficulty of matching the two sources and the occurance of discrepancies between such sources when they age.

The reason for arranging the light paths to extend across the regions exposed to fluid in use in divergent directions is to ensure that minor variations in the positioning of the light transmitting means do not significantly affect the proportion of light received by each lightsensitive element, as would be the case were the two elements arranged closely adjacent to one another with the two light paths being substantially parallel across the regions exposed to fluid.

Thus, in one form of the invention the two light paths are approximately 180$^{\circ}$ out of line with one another. This makes the output of the two lightsensitive elements relatively insensitive to variations in the light supply from the light transmitting means brought about by, for example, the shocks and vibrations occurring during normal use of an automatic washing machine when the sensor arrangement is mounted in such a machine.

·In its preferred form, the invention features a housing for the light transmitting means and the two lightsensitive elements, which has a transmitting portion and two receiving portions arranged in line with one another with the transmitting portion spaced between the two receiving portions such that the spaces between the transmitting portion and one of the receiving portions and the transmitting portion and the other of the receiving portions respectively provide the regions exposed to fluid in use and such that light from the means for directing light is emitted from the transmitting portion towards the two receiving portions where it is directed to the respective photosensitive elements.

For example, the sensor arrangement may have a printed circuit board spaced from the transmitting and receiving portions and a light bulb may be mounted on the board to project into the transmitting portion, while prisms are arranged in the two receiving portions to direct the light beam to the lightsensitive elements which are also mounted on the printed circuit board. This allows the electrical components for the sensor arrangement to be assembled in a compact and simple manner.

The invention also resides in the circuitry for use in such a sensor arrangement.

One such circuit comprises a respective logarithmic converter connected to each photosensitive element, a comparator for providing a signal representative of the difference between the outputs of the two logarithmic converters, and an exponential converter responsive to said signal for producing a control output.

An alternative circuit comprises a feedback arrangement connected between the means for directing light and one of the photosensitive elements so as to maintain the output of said one photosensitive element constant, and means connected to the other photosensitive element for providing a control signal.

In either case, it is a feature of the invention that the circuitry includes a fault detection system comprising a pair of comparators each having a first input connected to a respective one of the photosensitive elements and a second input connected to a source of reference voltage, and display means controlled by the outputs of the comparators for indicating when there is a fault in the circuitry.

The comparators may also be arranged to block the means for supplying a control signal when there is a fault in the voltage supply, in the means for directing light, or in either of the two photosensitive elements.

In use, the sensor arrangement of this invention is preferably situated in a wast pipe of a washing machine for carrying rinsing water away from the machine. Alternatively, however, it may be mounted in the machine itself.

The invention is described further by way of example with reference to the accompanying drawings in which :

Figure 1 is a diagrammatic view of a clothes washing machine including a sensor arrangement according to the invention;

Figure 2 is a diagrammatic section through the sensor arrangement;

Figure 3 is a circuit diagram of a first circuit for use with the sensor arrangement; and

Figure 4 is a circuit diagram of a second circuit for use with the sensor arrangement.

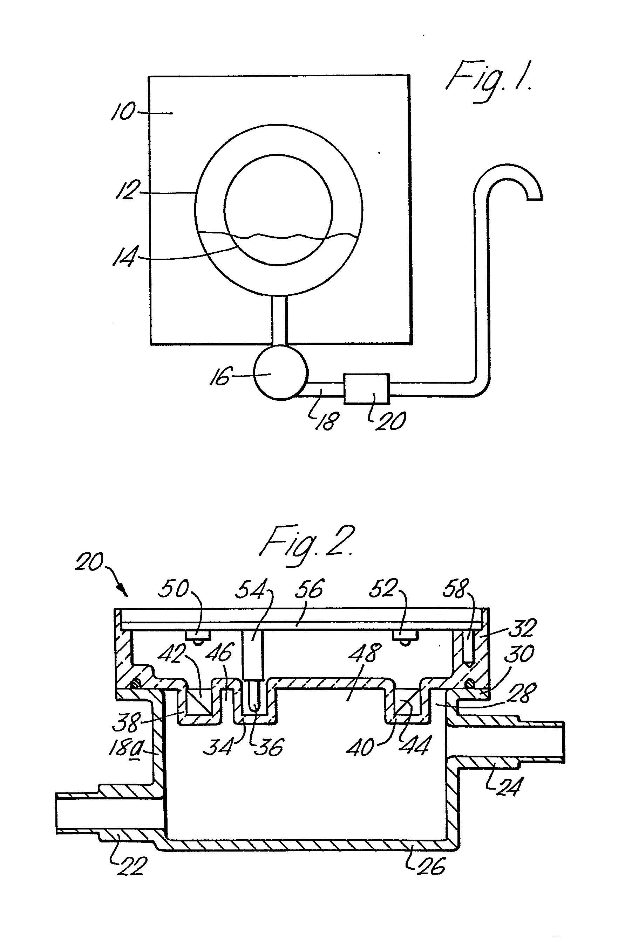

Referring initially to Figure 1, this shows a clothes washing machine 10 including a tub 12 for receiving liquid i.e. washing liquid during a washing cycle and rinsing water during a rinsing cycle. Within the tub 12 there is a perforate rotatable drum 14 which carries the load being washed. A drainage pump 16 is coupled to the tub 12 for draining the liquid from the tub at the end of each cycle by way of a waste pipe 18. Mounted in a section of the waste pipe is a sensor arrangement 20 which is adapted to measure the cleanliness of the water being pumped from the pump 12. When this water acquires a certain degree of clarity, or cleanliness, the sensor arrangement 20 provides an output signal to the machine's main control (which is conventional and thus not shown) to indicate that rinsing may be terminated and that the machine may progress to the next stage of its programme, for example drying.

The sensor arrangement 20 itself is shown in greater detail in Figure 2. As illustrated in this figure, the pipe 18 includes a section 18a formed with an inlet nozzle 22, an outlet nozzle 24 offset from the inlet nozzle 22 in the longitudinal direction of the section 18a, and an enlarged body 26. The body 26 is formed with a lateral opening 28 encircled by a flange 30, and an integrally moulded transparent housing 32 for the sensor arrangement 20 is sealed against this flange so that portions of the housing project into the enlarged body 26.

There are three portions of the housing 32 which project into the enlarged body 26, namely a transmitting portion 34 housing a light source 36, and two receiving portions 38,40 housing prisms 42,44. These three portions are spaced from one another with the transmitting portion 34 between the other two portions 38,40 and closer to the portion 38 to define two regions 46,48 exposed to water in the pipe section 18a across which light from the source 36 travels to reach the prisms 42,44. In practice, the portion 38 is disposed a few millimeters away from the portion 34, whereas the portion 40 is a few centimetres away from the portion 34. Each prism is arranged to receive light from the transmitting portion 34 and to redirect this light towards a respective photosensitive element 50,52, in the form of a phototransistor.

The two phototransistors, a mounting 54 for the light source 36, and supports (not shown) for the prisms 50,52, are all supported at a distance from the three portions 34,38 and 40 on a printed circuit board 56 which forms a unit with the housing 32, being secured to this by screws 58. The printed circuit board carries circuitry responsive to the outputs of the phototransistors for providing a control signal to the main control of the machine.

In use, water discharged by the pump 16 flows through the waste pipe section 18a over the sensor arrangement 20 and between the portions 34,38 and 40 of the sensor housing and the cloudiness of this water affects the readings of the two phototransistors. Initially, the machine undergoes a number of washing cycles and the water discharged at the end of each of these is soapy and relatively opaque so that not much light is received by the phototransistors. In response, no control signal is produced. Following the washing cycles, a number of rinsing cycles take place. The water discharged from the tub 12 at the end of each of these becomes increasingly less cloudy and it becomes increasingly easy for light to pass across the two regions 46,48. The phototransistors respond to this condition and once the discharged rinsing water reaches a sufficient degree of clarity, the sensor arrangement produces its control signal whereupon the main control of the machine terminates the rinsing cycles and advances the machine to the next stage of the washing operation.

As shown in Figure 2, the light paths from the light source 36 to the phototransistors 50,52 in each case traverse two transparent walls presented by the housing 32. The two walls traversed by one light path are similar in material, in construction and in dimensions with the two walls traversed by the other light path and the intensity of light received by the two phototransistors may therefore be represented as follows:

$$I_c = I_o \, k_p^2 \, k_d^2 \, e^{-\tau d_c}$$

$$I_m = I_o \, k_p^2 \, k_d^2 \, e^{-\tau d_m}$$

where $I_c$ is the intensity of light received by the phototransistor 50

$d_c$ is the distance between the transmitting portion 34 and the receiving portion 38;

$I_m$ is the intensity of light received by the phototransistor 52;

$d_m$ is the distance between the transmitting portion 34 and receiving portion 40;

$I_0$ is the intensity of light emitted by the source 36;

$k_p$ is the coefficient of transmission of the walls of the housing 32 through which light passes;

$k_d$ is the coefficient of transmission of the layers of deposit formed on these walls; and is the coefficient of turbidity of the liquid.

Combining these two equations we get $\dfrac{I_c}{I_m} = e^{k \hat{\tau}}$.

From this, it is evident that since the outputs of the two phototransistors 50, 52 are proportional to $I_c$ and $I_m$, these outputs can be employed to determine the turbidity of the water in the regions 46, 48 accordingly.

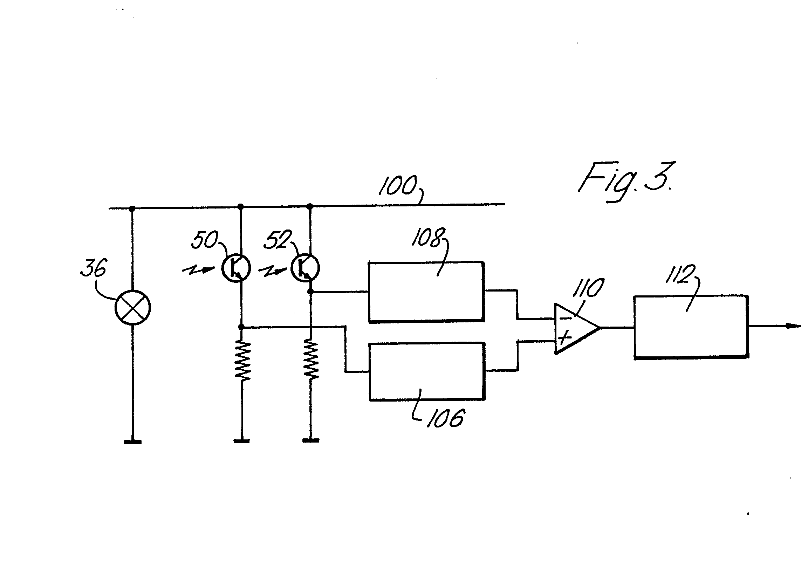

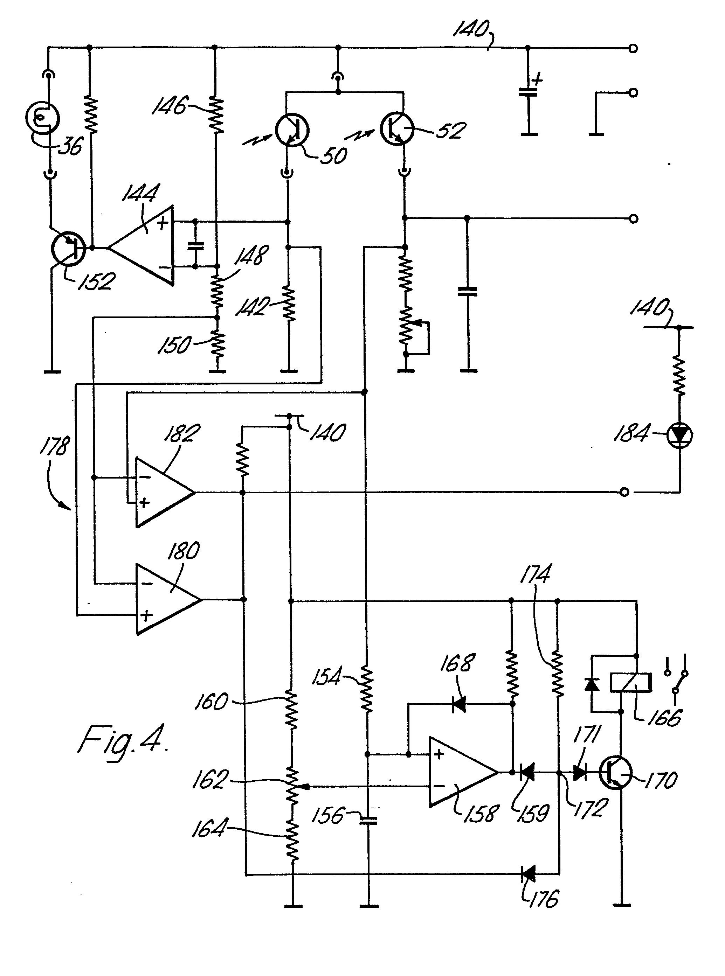

The circuitry shown in either of Figures 3 and 4 may be used for this purpose.

The first circuit, shown in Figure 3, includes the light source 36 and the two phototransistors 50,52 connected in parallel between a voltage supply line 100 and earth, each of the phototransistors being connected to earth by way of a respective resistor 102,104. Respective logarithmic amplifiers 106, 108 are arranged to convert the voltage outputs of the two transistors into logarithmic values, and a differential amplifier 110 is connected to the outputs of the logarithmic amplifiers to compare the voltages at these outputs and supply at its output a signal which is a function of the difference of these two voltages. This signal forms the input to an exponential amplifier 112 whose output is proportional to $I_c$ / $I_m$ and which is arranged to activate a switch (not shown) when this output indicates that the water in the pipe section 18a has reached a sufficient degree of clarity for rinsing to be discontinued.

Turning now to Figure 4, this shows the light source 36 again connected in parallel with the two phototransistors 50,52, and supplied with voltage from a voltage supply line 140. The emitter of the phototransistor 50 is connected to earth, by way of a resistor 142, and also to one input of a voltage comparitor 144 with an open collector output. The other input of the comparator is connected to a junction between two of a series of three resistors 146,148 and 150 arranged between the supply line 140 and earth and is thus supplied with a reference voltage. The output of the comparator 144 controls a transistor 152 to switch this on or off in dependence upon whether or not the voltage from the phototransistor 50 supplied to one input of the comparator 144 is greater than the reference voltage supplied to the other input.

When light is emitted by the source 36, the phototransistor 50 receives this light and the voltage which it supplies to the comparator 144 rises. As this voltage rises above the reference voltage, which is determined by the three resistors 146 to 150, the comparator 144 switches off the transistor 152 to cut off the light source 36. The output from the phototransistor 50 then drops once more until it is below the reference voltage whereupon the transistor 152 is switched on once more to activate the light source 36. The cycle is then repeated. Although the voltage across the light source varies considerably under the control of the comparator 144, this source is selected with a filament having a thermal inertia such that the intensity of light received by the phototransistor 50 alters only marginally. Thus, although the output from this phototransistor varies very slightly above and below the reference voltage, nonetheless it varies to a very much lesser extent than the voltage across the light source 36 and can be considered to be substantially constant.

In this manner, the voltage at the output of the phototransistor 50 is maintained substantially constant in spite of variations in the other sensor components due to ageing, the build up of surface deposits and such like.

The phototransistor 52 is connected in series with a further resistor 154 and a capacitor 156, and a junction between the resistor 154 and the capacitor 156 is connected to one input of another voltage comparator 158 having an open collector output.

The other input of this comparator is supplied with a second reference voltage determined by a series connection of a resistor 160, a potentiometer 162 and a further resistor 164 which is arranged between the supply line 140 and earth. Adjustment of the potentiometer 162 enables the second reference voltage to be varied as desired.

Once the output of the phototransistor 52 rises above the second reference voltage and remains at this level for a predetermined length of time, which is determined by the resistor 154 and the capacitor 156, the output of the voltage comparator 158 rises to permit a transistor 170 to be switched on, which energises a relay 166. A feedback path including a diode 168 then maintains the comparator 158 in its condition in which the transistor 170 may be switched on and the relay 166 energised.

In order for the relay 166 to be energised by the transistor 170, it is necessary not only for the voltage comparator 158 to be in the appropriate condition but also for two comparators 180 and 182 to have their output high. These two voltage comparators are part of a fault detection arrangement 178 which is described below. The transistor 170 is controlled by the voltage at a junction 172, which junction is connected by way of respective diodes 159,171 to the output of the comparator 158 and the base of the transistor 170 and is also connected by way of a resistor 174 to the voltage supply line 140 and a diode 176 to the of the fault detection arrangement 178 as shown.

When all the parts of the circuit illustrated are in proper working condition, the output of the fault detection circuit arrangement 178 is at a predetermined voltage such that the voltage at the junction 172 rises when the comparator 158 is in its condition permitting the relay to be energised, and this switches the transistor 170 on whereupon the relay is energised. When certain faults are present in the circuitry shown in Figure 4 the output of the fault detection arrangement 178 drops to zero volts which has the effect of lowering the voltage at the junction 172 through the diode 176. Equally, when the output of the comparator 158 is low, i.e. when the output of the phototransistor 52 has not risen to the required level, the voltage at the junction 172 remains low as a result of the diode 159.

Energisation of the relay 166 produces an output signal which is applied by circuitry (not shown) to the main control of the machine to indicate that the rinsing water has acquired a sufficient degree of clarity, as determined by the light received by the phototransistor 52, to enable further rinsing to be discontinued.

The fault detection circuit arrangement 178 comprises a pair of voltage comparators 180,182 having open collector outputs. A third reference voltage taken from the junction between the two resistors 148 and 150 is applied to one input of each comparator. The other input of one comparator is taken from the output of the phototransistor 50, and the other input of the other comparator is taken from the output of the phototransistor 52. The outputs of the two comparators are connected to a display device 184 in the form of an LED. Each comparator compares the third reference voltage with the output from one of the two phototransistors and, providing that the circuit is operational, the comparators produce a positive output voltage. However, if for any reason the voltage supplied by either of the two phototransistors drops below the third reference voltage, the output of the relevant comparator drops to zero and the display device is lit up.

Thus, the fault detection circuit arrangement 178 indicates that a fault is present in any of the following circumstances: the light source 36 breaks down, light is prevented from reaching the phototransistor 50,52 as a result of complete occlusion by a layer or layers of deposit on one or more of the portions 34,38 and 40 of the sensor housing 32, either of the phototransistors breaks down, or the supply of voltage is cut off.

In the circuit shown in Figure 4, since the output of the phototransistor 50 is maintained relatively constant, it can be seen from reference to the equation mentioned above that it is merely necessary to determine from the output of the other phototransistor when the rinsing water in the washing machine has reached a sufficient degree of clarity for rinsing to be terminated.

The described sensor arrangement is not only compact and of simple construction, but it also provides an accurate indication as to when further rinsing is unnecessary. By the use of two sensor elements and a single light source, compensation is made for the formation of deposits on the exposed portions of the sensor housing 32, and by arranging the transmitting and receiving portions of this housing in line with one another inaccuracies in the output of the sensing elements prompted by minor variations in the positioning of the light source are to a large extent avoided. It is not, however, essential for the transmitting portion of the housing to be arranged precisely on a line between the two receiving portions. Instead, these three portions may be situated at the apices of a triangle providing only that the angle subtended by the two receiving portions at the transmitting portion is sufficiently at large for the sensing elements to be insensitive to minor displacements of the light source 36. These displacements will occur in the normal course of events while the machine is running as a result of vibrations induced by rotation of the drum 14.

18

Whilst the regions 46,48 have been described as having lengths between the transmitting and receiving portions 34, 38, 40 of a few millimetres and a few centimetres respectively, this is not essential. However, the lengths should be unequal, with that of the region 46 preferably being not less than a few millimetres, because otherwise particles may block the passage of light, and with that of the region 48 preferably being not more than a few centimetres to avoid the need for the phototransistor 52 to be particularly sensitive. In practice, a ratio in the range from 1:8 to 1:10 has been found to be satisfactory for these lengths.

CLAIMS:

1.    A sensor arrangement comprising means for transmitting light along two light paths which diverge across regions of space accessible to a fluid in use of the arrangement, and two light sensitive elements disposed in the light paths for generating outputs dependent upon the clarity of the fluid, the light transmitting means and the light sensitive elements being arranged to co-operate with control circuitry  so as to compensate for spurious variations in local conditions affecting the transmission of light from the light transmitting means to the light sensitive elements and so as to generate an output signal when the fluid has a pre-determined degree of clarity.

2.    An arrangement as claimed in claim 1, in which the two light paths diverge by approximately 180 degress across the regions of space.

3.    An arrangement as claimed in claim 1 or 2,    further comprising a housing for the light transmitting means and the light sensitive elements, the housing having a transmitting portion from which the light paths emerge to traverse the regions of space and two receiving portions arranged in the light paths and spaced from the transmitting portion such that the distance between the transmitting portion and one of the receiving portions is less than that between the transmitting portion and the other of the receiving portions.

4.   An arrangement as claimed in claim 3, in which a single light source is housed within the transmitting portion.

5.   An arrangement as claimed in claim 3 or 4, in which each of the receiving portions houses a prism  for directing light to a respective one of the photosensitive elements.

6.   An arrangement as claimed in any of claims 3 to 5, in which the housing comprises an integrally moulded unit.

7.   An arrangement as claimed in any of claims 3 to 6, in which the housing supports a printed circuit board bearing the light transmitting means, the light sensitive elements, and the control circuitry.

8. An arrangement as claimed in any preceding claim, in which the control circuitry comprises a respective logarithmic converter connected to each of the light sensitive elements, a comparator for providing a signal representative of the difference between the outputs of the two logarithmic converters and an exponential converter responsive to the difference signal for producing the output signal.

9. An arrangement as claimed in any of claims 1 to 7, in which the control circuitry comprises a feed-back arrangement connected between the light transmitting means and one of the light sensitive elements so as to maintain the output of said one light sensitive element substantially constant, and means connected to the other light sensitive element for providing the output signal.

10. An arrangement as claimed in claim 9, in which feed-back arrangement comprises a comparator arranged to compare the output of said one light sensitive element with a reference voltage, and a transistor operable by the comparator to control the voltage to the light transmitting means.

11. An arrangement as claimed in any of claims 8 to 10, further comprising a fault detection system for indicating when there is a fault in the sensor arrangement.

12. An arrangement as claimed in claim 11, in which the fault detection system comprises a pair of comparitors each having a first input connected to irrespective one of the light sensitive elements and a second input connected to a source of reference voltage, and display means controlled by the outputs of the comparitors.

13. An arrangement as claimed in claim 11 or 12, in which the fault detection system is arranged to prevent the generation of the output signal in the event of a fault.

14. A washing machine including a sensor arrangement as claimed in any preceding claim.

1/3

Fig. 1.

Fig. 2.

213

*Fig. 3.*

Fig.4.

0058576

3/3

## European Patent Office
## EUROPEAN SEARCH REPORT

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | US - A - 4 222 250 (TORITA) <br> * complete document * <br> — | 1 | D 06 F 39/00 |
| A | US - A - 4 237 565 (TORITA et al.) <br> * complete document * <br> -- | 1 | |
| P,A | GB - A - 2 068 419 (TOKYO SHIBAURA DENKI) <br> * fig. 2 * <br> -- | 1 | **TECHNICAL FIELDS SEARCHED (Int.Cl. 3)** |
| P,A | DE - B1 - 2 950 929 (BOSCH-SIEMENS) <br> * claim 1 * <br> --- | 1 | D 06 F 39/00 <br> A 47 L 15/42 |
| P,A | DE - A1 - 2 949 254 (LICENTIA) <br> * claim 1 * <br> -- | 1 | |
| A | DE - A - 1 485 076 (PHILIPS') <br> * claim 1 * <br> ---- | | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| The present search report has been drawn up for all claims | | |
|---|---|---|
| Place of search <br> Berlin | Date of completion of the search <br> 07-04-1982 | Examiner <br> KLITSCH |

EPO Form 1503.1  06.78